# EUROPÄISCHE PATENTSCHRIFT

(11) **EP 3 113 081 B1**
(45) Veröffentlichungstag und Bekanntmachung des Hinweises auf die Patenterteilung: **12.06.2019**
(21) Anmeldenummer: 15174568.4
(22) Anmeldetag: 30.06.2015
(51) Int. Cl.: G06K 19/07

(54) **FUNK-TRANSPONDER UND VERFAHREN ZUR ABSTIMMUNG EINES FUNK-TRANSPONDERS**
RADIO TRANSPONDER AND METHOD FOR TUNING A RADIO TRANSPONDER
TRANSPONDEUR RADIO ET PROCÉDÉ DE DÉTERMINATION D'UN TRANSPONDEUR RADIO

(43) Veröffentlichungstag der Anmeldung: 04.01.2017
(73) Patentinhaber: Siemens Aktiengesellschaft, 80333 München (DE)
(72) Erfinder: Gila, Janos, 2340 Mödling (AT); Jahn, Martin, 3862 Eisgarn (AT); Schiefer, Martin, 3100 St. Pölten (AT)

(56) Entgegenhaltungen:
- WO-A1-2008/065003
- JP-A- 2006 243 920

## Beschreibung

In RFID-Systemen (Radio Frequency Identification) hängen eine maximale Lesereichweite bzw. ein möglicher Abstand zwischen Transponder bzw. Tag und Lesegerät maßgeblich von einer Abstimmung des Transponders hinsichtlich seines Eingangsresonanzkreises ab. Die umfasst insbesondere Antennen- bzw. Spuleneigenschaften. Für eine wirksame Abstimmung des Eingangsresonanzkreises sind nicht nur Transponderkomponenten, wie Gehäuse, einzubeziehen, sondern auch Umgebungsbedingungen. Üblicherweise werden Transponder für angenommene typische Umgebung abgestimmt. Weichen reale Umgebungsbedingungen von den angenommenen ab, wirkt sich dies im Allgemeinen nachteilig auf die Lesereichweite auf. Beispielsweise beeinflussen in Industrie-Anlagen häufig vorkommende metallische Oberflächen aufgrund von Reflexionen Empfang bzw. Lesereichweite stark. Eine Fehlanpassung ist bei passiven Transpondern besonders kritisch, da mangels eigener Energieversorgung Kompensationsmöglichkeiten entfallen, die Kompensationswerte behalten können.

Eine Abstimmung des Eingangsresonanzkreises eines Transponders kann grundsätzlich durch Anpassung von Antenneninduktivität und Schaltkreis-Eingangskapazität erfolgen. Allerdings ermöglicht dies nur ansatzweise eine Anpassung an variierende Umgebungsbedingungen. In US 2010/0019907 A1 ein sich abstimmendes RFID-Tag beschrieben, dessen Antenne automatisch durch Regelung von Wirk- und Blindleistungsteil einer antennenseitigen komplexen Impedanz angepasst wird. Sowohl für den Wirk-leistungsanteil als auch für den Blindleistungsteil ist ein separater Regelungskreis vorgesehen. Der Regelungskreis für den Blindleistungsanteil bewirkt eine selektive Verbindung von kapazitiven bzw. induktiven Komponenten mit dem Eingangsresonanzkreis des Transponders. Dagegen dient der Regelungskreis für den Wirkleistungsanteil zur Regelung einer in den Eingangsresonanzkreis des Transponders integrierten Stromquelle. Das in US 2010/0019907 A1 beschriebene Konzept ist daher für passive Transponder ohne eigene Energieversorgung nicht geeignet.

Von STMicroelectronics sind RFID- und NFC-Transponderchips (Near-field Communication), Typ M24SR bekannt, bei denen der Eingangsresonanzkreis mittels einer Varaktordiode abstimmbar ist (http://www.st.com/web/en/resource/technical/document/ datasheet/DM00067892.pdf, Seite 76). Da die Varaktordiode mittels Spannung gesteuert wird, ist eine permanente Energieversorgung des Transponderchips erforderlich, so dass bei Nutzung der Varaktordiode auch hier keine Nutzung für passive Lösungen in Frage kommt.

Aus WO 2008/065003 A1 und JP 2006 243920 A sind jeweils Funk-Transponder entsprechend dem Oberbegriff von Anspruch 1 bekannt.

Der vorliegenden Erfindung liegt daher die Aufgabe zugrunde, einen passiv betreibbaren Funk-Transponder zu schaffen, der auf einfache Weise für eine Verwendung bei unterschiedlichen Umgebungsbedingungen anpassbar ist, und ein geeignetes Verfahren zu dessen Abstimmung anzugeben.

Diese Aufgabe wird erfindungsgemäß durch einen Funk-Transponder mit den in Anspruch 1 angegebenen Merkmalen und durch ein Verfahren mit den in Anspruch 10 angegebenen Merkmalen gelöst. Vorteilhafte Weiterbildungen der vorliegenden Erfindung sind in den abhängigen Ansprüchen angegeben.

Der erfindungsgemäße Funk-Transponder, beispielsweise ein RFID-Tag, umfasst eine Antenne, eine Sende- und Empfangseinheit sowie einen mit der Antenne verbundenen Resonanzkreis, der eine Mehrzahl parallel zueinander angeordneter Kondensatoren umfasst. Die Kondensatoren sind jeweils in Reihe zu einer Sicherung (Fuse) angeordnet. Dabei ist ein Kondensator mittels einer in Reihe angeordneten Sicherung zur Abstimmung des Resonanzkreises schaltbar, beispielsweise durch Schmelzen der jeweiligen Sicherung. Zusätzlich ist eine dem Resonanzkreis zugeordnete Steuerungseinheit vorgesehen, die zur Erzeugung eines Schaltsignals für eine jeweilige Sicherung des Resonanzkreises in Abhängigkeit von einem durch ein Funk-Transponder-Lesegerät übermittelten oder in einer Funk-Transponder-Steuerungseinheit erzeugten Steuerungssignal ausgestaltet und eingerichtet ist. Außerdem weist der Funk-Transponder eine Speichereinheit auf, die mittels eines Funk-Transponder-Lesegerätes auslesbar bzw. beschreibbar ist. Vorzugsweise ist der Funk-Transponder passiv betrieben bzw. weist keine eigene Energieversorgung auf.

Aufgrund einer Verwendung von Sicherungen als Abstimmelementen für den Resonanzkreis des erfindungsgemäßen Funk-Transponders ist ein passiver Betrieb ohne eigene Energieversorgung problemlos möglich. Darüber hinaus kann der Resonanzkreis des Funk-Transponders durch selektives Schalten der Kondensatoren und somit durch Anpassung seiner Resonanzfrequenz für eine Verwendung in unterschiedlichen Umgebungen abgestimmt werden. Dies ermöglicht insbesondere eine verbesserte Lesereichweite.

Erfindungsgemäß umfasst der Resonanzkreis eine parallel zu den Kondensatoren angeordnete Kapazitätsdiode. Dabei ist die Steuerungseinheit zur Ansteuerung der Kapazitätsdiode innerhalb eines iterativen Resonanzfrequenzermittlungsvorgangs in Abhängigkeit von einem durch ein Funk-Transponder-Lesegerät übermittelten oder in einer Funk-Transponder-Steuerungseinheit erzeugten Steuerungssignal ausgestaltet und eingerichtet. Dies ermöglicht eine besonders genaue Kalibrierung des Resonanzkreises, und zwar bevor die den Kondensatoren zugeordneten Sicherungen endgültig geschaltet bzw. geschmolzen werden. Darüber hinaus kann die Steuerungseinheit zur Erzeugung eines Schaltsignals für eine jeweilige Sicherung des Resonanzkreises in Abhängigkeit einer durch ein Funk-Transponder-Lesegerät ermittelten Resonanzfrequenz ausgestaltet und eingerichtet sein. In diesem Fall erfolgt mittels der Schaltsignale für die Sicherungen eine abschließende Konfigurierung des Resonanzkreises.

Vorzugsweise ist das durch das Funk-Transponder-Lesegerät übermittelte Steuerungssignal aus einem von einem Antwortsignal des Funk-Transponders umfassten Feldstärkemesswert abgeleitet. Alternativ dazu kann das Steuerungssignal in der Funk-Transponder-Steuerungseinheit aus einem im Funk-Transponder gemessenen Feldstärkemesswert abgeleitet sein.. Des weiteren ist die Steuerungseinheit vorteilhafterweise zur Auslösung einer Übermittlung des Antwortsignals durch die Sende- und Empfangseinheit bei einem Empfang eines Abfragesignals eines Funk-Transponder-Lesegeräts ausgestaltet und eingerichtet.

Entsprechend einer bevorzugten Ausgestaltung der vorliegenden Erfindung sind bei dem die Sicherungen Polysilizium-Sicherungen. Die Polysilizium-Sicherungen sind beispielsweise mittels einer Strombelastung schaltbar, und zwar irreversibel. Entsprechend einer alternativen Ausgestaltung der vorliegenden Erfindung können die Sicherungen in einen Halbleiter-Chip integriert und mittels Laser schaltbar sein.

Entsprechend dem erfindungsgemäßen Verfahren zur Abstimmung eines Funk-Transponders gemäß vorangehenden Ausführungen wird mittels eines Funk-Transponder-Lesegeräts ein Abfragesignal an den Funk-Transponder gesendet. Der Funk-Transponder ermittelt für das Abfragesignal einen Feldstärkemesswert und übermittelt ein Antwortsignal mit dem Feldstärkemesswert an das Funk-Transponder-Lesegerät oder an eine Funk-Transponder-Steuerungseinheit. Das Funk-Transponder-Lesegerät oder die Funk-Transponder-Steuerungseinheit vergleicht den Feldstärkemesswert mit einem vorgebbaren Referenzwert, beispielsweise einem früheren bzw. vorangehenden Feldstärkemesswert. Darüber hinaus veranlasst das Funk-Transponder-Lesegerät oder die Funk-Transponder-Steuerungseinheit bei einer definierten Abweichung des Feldstärkemesswerts vom Referenzwert ein Schalten eines ersten Resonanzkreis-Kondensators mittels einer zugeordneten Sicherung oder eines ersten Kapazitätswerts des Funk-Transponders und eine erneute Ermittlung eines aktualisierten Feldstärkemesswerts zur erneuten Auswertung. Bei einer definierten Abweichung des aktualisierten Feldstärkemesswerts vom Referenzwert veranlasst das Funk-Transponder-Lesegerät oder die Funk-Transponder-Steuerungseinheit iterativ ein Schalten eines weiteren Resonanzkreis-Kondensators mittels einer zugeordneten Sicherung oder eines weiteren Kapazitätswerts des Funk-Transponders und eine erneute Feldstärkeermittlung.

Entsprechend einer vorteilhaften Weiterbildung des erfindungsgemäßen Verfahrens umfasst der Resonanzkreis eine parallel zu den Kondensatoren angeordnete Kapazitätsdiode. Dabei wird die Kapazitätsdiode innerhalb eines iterativen Resonanzfrequenzermittlungsvorgangs durch das Funk-Transponder-Lesegerät oder durch die Funk-Transponder-Steuerungseinheit in Abhängigkeit vom Feldstärkemesswert angesteuert. Darüber hinaus werden die Resonanzkreis-Kondensatoren für eine abschließende Konfigurierung des Resonanzkreises beispielsweise mittels zugeordneter Sicherungen in Abhängigkeit einer durch das Funk-Transponder-Lesegerät oder durch die Funk-Transponder-Steuerungseinheit ermittelten Resonanzfrequenz geschaltet.

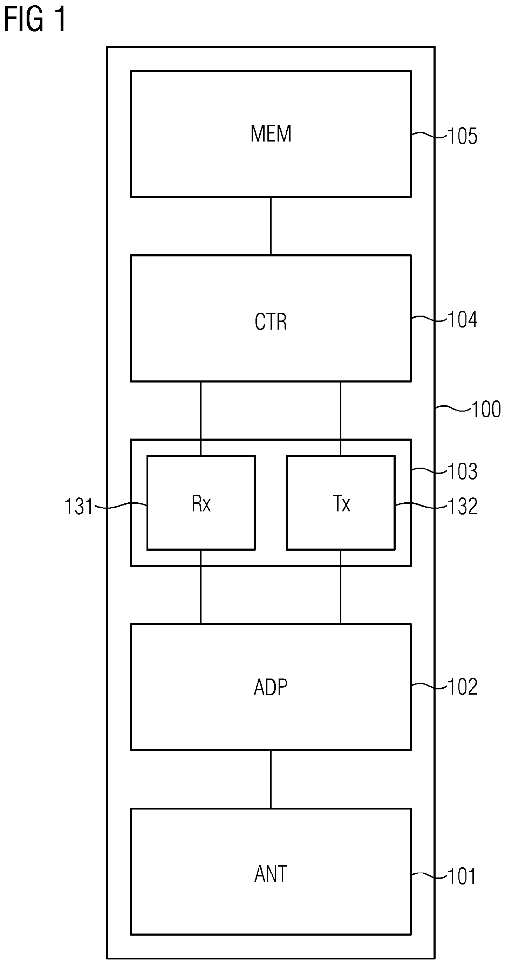

Die vorliegende Erfindung wird nachfolgend an einem Ausführungsbeispiel anhand der Zeichnung näher erläutert. Es zeigt
- Figur 1: eine schematische Darstellung eines Funk-Transponders,
- Figur 2: ein Ersatzschaltbild für ein Funk-Transponder-System mit dem Funk-Transponder entsprechend Figur 1 und einem mit diesem verbundenen Funk-Transponder-Lesegerät,
- Figur 3: ein Ablaufdiagramm zur Abstimmung eines Funk-Transponders entsprechend Figur 1.

Der in Figur dargestellte Funk-Transponder 100 ist im vorliegenden Ausführungsbeispiel ein RFID-Tag und umfasst eine Antenne 101 sowie eine Sende- und Empfangseinheit 103, die eine Demodulatoreinheit 131 und eine Modulatoreinheit 132 zum Decodieren von Abfragesignalen an den Funk-Transponder 100 bzw. zum Codieren von Antwortsignalen des Funk-Transponders 100 aufweist.

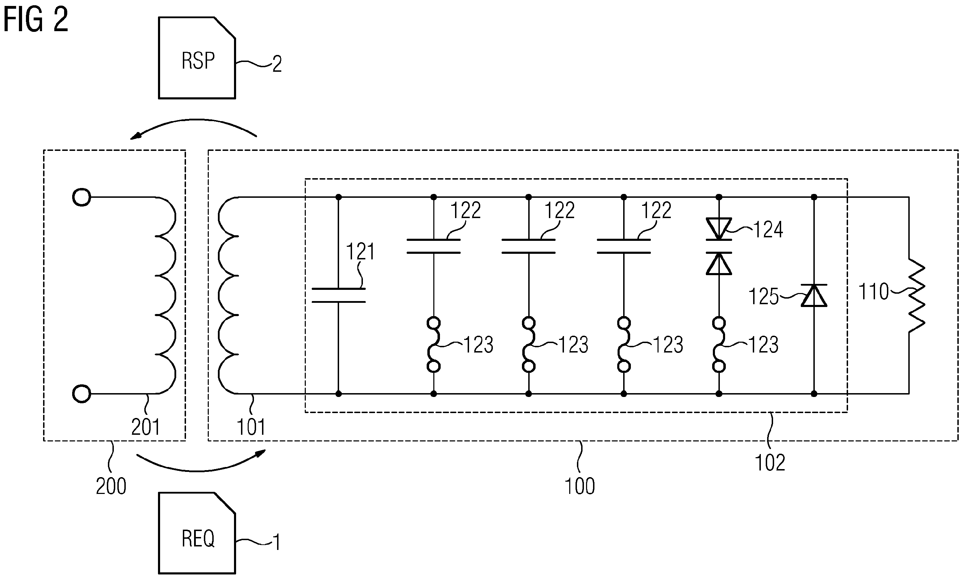

Entsprechend dem in Figur 2 dargestellten Ersatzschaltbild eines Funk-Transponder-Systems werden Abfragesignale 1 vorzugsweise durch ein Funk-Transponder-Lesegerät 200 an den Funk-Transponder 100 übermittelt, während Antwortsignale 2 von diesem an das Funk-Transponder-Lesegerät 200 übermittelt werden. Die Antenne 101 des Funk-Transponders 100 sowie eine Antenne 201 des Funk-Transponder-Lesegeräts 200 sind im Ersatzschaltbild beispielhaft als miteinander gekoppelte Induktivitäten modelliert. Beiden Antennen können grundsätzlich auch als klassische Strahlungselemente, die sich in einem Fernfeld befinden, ausgeführt werden. Die Sende- und Empfangseinheit 103, eine Steuerungseinheit 104 und eine Speichereinheit 105 des Funk-Transponders 100 sind im Ersatzschaltbild gemäß Figur 2 zusammengefasst und als Lastwiderstand 110 modelliert. Die Speichereinheit 105 des Funk-Transponders 100 kann mittels des Funk-Transponder-Lesegerätes 200 ausgelesen bzw. beschrieben werden. Der Funk-Transponder 100 ist im vorliegenden Ausführungsbeispiel passiv betrieben und weist keine eigene Energieversorgung auf, sondern wird über Abfragesignale 1 des Funk-Transponder-Lesegeräts 200 gespeist.

Zusätzlich umfasst der Funk-Transponder 100 einen einerseits mit der Antenne 101 und andererseits mit der Sende- und Empfangseinheit 103 verbundenen adaptierbaren Resonanzkreis 102. Dieser Resonanzkreis 102 weist entsprechend dem in Figur 2 dargestellten Ausführungsbeispiel eine Mehrzahl parallel zueinander angeordneter Kondensatoren 122 auf, die jeweils in Reihe zu einer Sicherung 123 angeordnet sind. Die Kondensatoren 122 können dabei jeweils mittels ihrer zugeordneten Sicherung 123 zur Abstimmung des Resonanzkreises 102 abgeschaltet werden. Die Sicherungen 123 können beispielsweise Polysilizium-Sicherungen sein, die in einen Halbleitchip integriert und mittels einer Strombelastung schaltbar sind. Alternativ dazu können die Sicherungen 123 in einen Halbleiter-Chip integriert und mittels Laser schaltbar sein. Darüber hinaus ist der adaptierbare Resonanzkreis 102 mit der Steuerungseinheit 104 des Funk-Transponders 100 verbunden, die unter anderem zur Erzeugung von Schaltsignalen für die Sicherungen 123 des Resonanzkreises 102 in Abhängigkeit von einem durch das Funk-Transponder-Lesegerät 200 übermittelten Steuerungssignal vorgesehen ist. Ein solches Steuerungssignal ist vorzugsweise von einem Abfragesignal 1 des Funk-Transponder-Lesegeräts 200 umfasst.

Parallel zu den abschaltbaren Kondensatoren 122 und ihren zugeordneten Sicherungen 123 umfasst der Resonanzkreis 102 einen fest geschalteten Kondensator 121, eine Kapazitätsdiode 124 und eine Schutzdiode 125. Eine Ansteuerung der Kapazitätsdiode 124 erfolgt innerhalb eines iterativen Resonanzfrequenzermittlungsvorgangs durch die Steuerungseinheit 104, und zwar in Abhängigkeit von einem durch das Funk-Transponder-Lesegerät 200 übermittelten Steuerungssignal. Dabei ist die Steuerungseinheit 104 zur Erzeugung von Schaltsignalen für die Sicherungen 123 des Resonanzkreises 102 in Abhängigkeit einer durch das Funk-Transponder-Lesegerät 200 ermittelten Resonanzfrequenz vorgesehen. Mittels der Schaltsignale für die Sicherungen 123 erfolgt damit eine abschließende Konfigurierung des Resonanzkreises 102. Das durch das Funk-Transponder-Lesegerät 200 übermittelte Steuerungssignal für die Steuerungseinheit 104 ist aus einem Feldstärkemesswert abgeleitet, der von einem durch den Funk-Transponder 100 übermittelten Antwortsignal 2 umfasst ist. Darüber hinaus ist die Steuerungseinheit 104 dafür vorgesehen, bei Empfang eines Abfragesignals 1 des Funk-Transponder-Lesegeräts 200 eine Übermittlung eines Antwortsignals 2 durch die Sende- und Empfangseinheit 103 auszulösen.

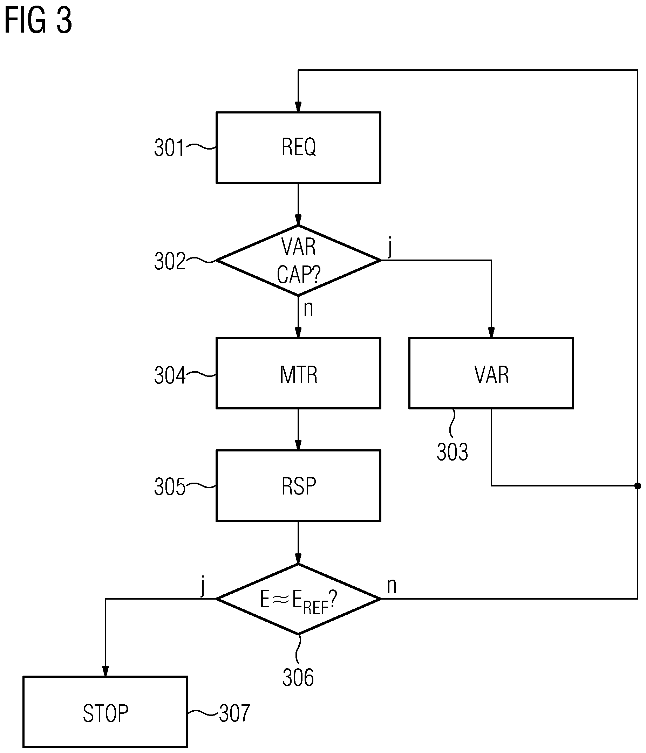

Entsprechend dem in Figur 3 dargestellten Ablaufdiagramm zur Abstimmung eines Funk-Transponders entsprechend vorangehenden Ausführungen sendet das Funk-Transponder-Lesegerät 200 zunächst ein Abfragesignal 1 an den Funk-Transponder 100 (Schritt 301). Der Funk-Transponder 100 prüft dann gemäß Schritt 302, ob das Abfragesignal 1 ein Steuerungssignal zur Konfigurierung des Resonanzkreises 102 umfasst. Ist dies der Fall, passt der Funk-Transponder 100 die Konfigurierung seines Resonanzkreises 102 an (Schritt 303), entweder vorläufig durch Ansteuerung der Kapazitätsdiode 124 oder abschließend durch Schalten von Sicherungen 123. Anschließend wartet der Funk-Transponder 100 auf ein neues Abfragesignal 1 des Funk-Transponder-Lesegeräts 200.

Umfasst das Abfragesignal 1 kein Steuerungssignal zur Konfigurierung des Resonanzkreises 102 ermittelt der Funk-Transponder 100 entsprechend Schritt 304 einen Feldstärkemesswert für das Abfragesignal 1 und übermittelt anschließend ein Antwortsignal 2 mit dem Feldstärkemesswert an das Funk-Transponder-Lesegerät 200 (Schritt 305). In Schritt 306 vergleicht das Funk-Transponder-Lesegerät 100 den Feldstärkemesswert mit einem vorgebbaren Referenzwert, der beispielsweise aus einer früheren Feldstärkemessung stammen kann. Bei einer definierten Abweichung des Feldstärkemesswerts vom Referenzwert veranlasst das Funk-Transponder-Lesegerät 100 ein Abschalten eines Resonanzkreis-Kondensators 122 oder ein Schalten eines Kapazitätswerts der Kapazitätsdiode 124. Hierzu übermittelt das Funk-Transponder-Lesegerät 200 entsprechend Schritt 301 erneut ein Abfragesignal 1 mit einem entsprechenden Steuerungssignal (vorläufig/abschließend) an den Funk-Transponder 100. Nach Anpassung der Konfigurierung des Resonanzkreises 102 gemäß Schritt 303 erfolgt eine erneute Übermittlung eines Abfragesignals 1 an den Funk-Transponder 100. Für dieses Abfragesignal 1 übermittelt der Funk-Transponder 100 entsprechend den Schritten 304 und 305 einen aktualisierten Feldstärkemesswert zur erneuten Auswertung an das Funk-Transponder-Lesegerät 200. Bei einer definierten Abweichung des aktualisierten Feldstärkemesswerts vom Referenzwert wird obiger Abstimmungsprozess iterativ erneut durchlaufen. Andernfalls kann der Abstimmungsprozess entsprechend Schritt 307 beendet werden.

Entsprechend einer weiteren Ausführungsform kann der Funk-Transponder eine Abstimmung seiner Anpassung selbst durchführen. Hierzu sendet das Funk-Transponder-Lesegerät ein definiertes Signal an den Funk-Transponder, der darauf einen autonomen Abgleich startet. Dabei wertet der Funk-Transponder die gemessene Feldstärke aus und optimiert unabhängig vom Funk-Transponder-Lesegerät seine Anpassung. Durch Setzen eines Statusbits kann der Funk-Transponder anzeigen, ob bzw. wann der Abgleich abgeschlossen ist. Durch wiederholtes Auslesen dieses Bits kann das Funk-Transponder-Lesegerät einen Status des Abgleichs überwachen. Grundsätzlich ist es für einen Abgleich stets wichtig, dass sich der Abstand zwischen Funk-Transponder-Lesegerät und Funk-Transponder sowie die Sendefeldstärke des Funk-Transponders während des Abgleichs nicht ändern.

## Patentansprüche

1. Funk-Transponder mit
- einer Antenne (101),
- einer Sende- und Empfangseinheit (103),
- einem mit der Antenne (101) verbundenen Resonanzkreis (102), der eine Mehrzahl parallel zueinander angeordneter Kondensatoren (122) umfasst, die jeweils in Reihe zu einer Sicherung (123) angeordnet sind, wobei ein Kondensator mittels einer in Reihe angeordneten Sicherung zur Abstimmung des Resonanzkreises schaltbar ist,
- einer dem Resonanzkreis (102) zugeordneten Steuerungseinheit (104), die zur Erzeugung eines Schaltsignals für eine jeweilige Sicherung (123) des Resonanzkreises in Abhängigkeit von einem durch ein Funk-Transponder-Lesegerät (200) übermittelten oder in einer Funk-Transponder-Steuerungseinheit erzeugten Steuerungssignal (1) ausgestaltet und eingerichtet ist,
- einer Speichereinheit (105), die mittels eines Funk-Transponder-Lesegerätes (200) auslesbar und/oder beschreibbar ist,
**dadurch gekennzeichnet, dass**
- der Resonanzkreis (102) eine parallel zu den Kondensatoren angeordnete Kapazitätsdiode (124) umfasst und dass
- die Steuerungseinheit (104) zur Ansteuerung der Kapazitätsdiode (124) innerhalb eines iterativen Resonanzfrequenzermittlungsvorgangs in Abhängigkeit von einem durch ein Funk-Transponder-Lesegerät (200) übermittelten oder in einer Funk-Transponder-Steuerungseinheit erzeugten Steuerungssignal ausgestaltet und eingerichtet ist.

2. Funk-Transponder nach Anspruch 1,
bei dem die Steuerungseinheit zur Erzeugung eines Schaltsignals für eine jeweilige Sicherung des Resonanzkreises in Abhängigkeit einer durch ein Funk-Transponder-Lesegerät oder durch eine Funk-Transponder-Steuerungseinheit ermittelten Resonanzfrequenz ausgestaltet und eingerichtet ist, wobei mittels der Schaltsignale für die Sicherungen eine abschließende Konfigurierung des Resonanzkreises erfolgt.

3. Funk-Transponder nach einem der Ansprüche 1 oder 2,
bei dem das durch das Funk-Transponder-Lesegerät übermittelte Steuerungssignal aus einem von einem Antwortsignal des Funk-Transponders umfassten Feldstärkemesswert abgeleitet ist, oder bei dem das Steuerungssignal in der Funk-Transponder-Steuerungseinheit aus einem im Funk-Transponder gemessenen Feldstärkemesswert abgeleitet ist.

4. Funk-Transponder nach Anspruch 3,
bei dem die Steuerungseinheit zur Auslösung einer Übermittlung des Antwortsignals durch die Sende- und Empfangseinheit bei einem Empfang eines Abfragesignals eines Funk-Transponder-Lesegeräts ausgestaltet und eingerichtet ist.

5. Funk-Transponder nach einem der Ansprüche 1 bis 4,
bei dem die Sicherungen Polysilizium-Sicherungen sind.

6. Funk-Transponder nach Anspruch 5,
bei dem die Polysilizium-Sicherungen mittels einer Strombelastung schaltbar sind.

7. Funk-Transponder nach einem der Ansprüche 1 bis 4,
bei dem die Sicherungen in einen Halbleiter-Chip integriert sind und mittels Laser schaltbar sind.

8. Funk-Transponder nach einem der Ansprüche 1 bis 7,
bei dem der Funk-Transponder ein RFID-Tag ist.

9. Funk-Transponder nach einem der Ansprüche 1 bis 8,
bei dem der Funk-Transponder passiv betrieben ist und/oder keine eigene Energieversorgung aufweist.

10. Verfahren zur Abstimmung eines Funk-Transponders entsprechend einem der Ansprüche 1 bis 9, bei dem
- mittels eines Funk-Transponder-Lesegeräts ein Abfragesignal an den Funk-Transponder gesendet wird,
- der Funk-Transponder einen Feldstärkemesswert für das Abfragesignal ermittelt,
- der Funk-Transponder ein Antwortsignal mit dem Feldstärkemesswert an das Funk-Transponder-Lesegerät oder an eine Funk-Transponder-Steuerungseinheit übermittelt,
- das Funk-Transponder-Lesegerät oder die Funk-Transponder-Steuerungseinheit den Feldstärkemesswert mit einem vorgebbaren Referenzwert vergleicht,
- das Funk-Transponder-Lesegerät oder die Funk-Transponder-Steuerungseinheit bei einer definierten Abweichung des Feldstärkemesswerts vom Referenzwert ein Schalten eines ersten Resonanzkreis-Kondensators mittels einer zugeordneten Sicherung oder eines ersten Kapazitätswerts des Funk-Transponders und eine erneute Ermittlung eines aktualisierten Feldstärkemesswerts zur erneuten Auswertung veranlasst,
- das Funk-Transponder-Lesegerät oder die Funk-Transponder-Steuerungseinheit bei einer definierten Abweichung des aktualisierten Feldstärkemesswerts vom Referenzwert iterativ ein Schalten eines weiteren Resonanzkreis-Kondensators mittels einer zugeordneten Sicherung oder eines weiteren Kapazitätswerts des Funk-Transponders und eine erneute Feldstärkeermittlung veranlasst,
**dadurch gekennzeichnet, dass**
- der Resonanzkreis eine parallel zu den Kondensatoren angeordnete Kapazitätsdiode umfasst und dass
- die Kapazitätsdiode innerhalb eines iterativen Resonanzfrequenzermittlungsvorgangs durch das Funk-Transponder-Lesegerät oder durch die Funk-Transponder-Steuerungseinheit in Abhängigkeit vom Feldstärkemesswert angesteuert wird.

11. Verfahren nach Anspruch 10,
bei dem die Resonanzkreis-Kondensatoren in Abhängigkeit einer durch das Funk-Transponder-Lesegerät oder durch die Funk-Transponder-Steuerungseinheit ermittelten Resonanzfrequenz mittels zugeordneter Sicherungen für eine abschließende Konfigurierung des Resonanzkreises geschaltet werden.

## Claims

1. Radio transponder having
- an antenna (101),
- a transmission and reception unit (103),
- a resonant circuit (102) that is connected to the antenna (101) and that comprises a plurality of capacitors (122) arranged in parallel with one another that are each arranged in series with a fuse (123), wherein a capacitor can be connected by means of a series-arranged fuse to tune the resonant circuit,
- a control unit (104) that is associated with the resonant circuit (102) and that is designed and set up to generate a trip signal for a respective fuse (123) of the resonant circuit on the basis of a control signal (1) transmitted by a radio transponder reader (200) or generated in a radio transponder control unit,
- a memory unit (105) that can be read and/or written to by means of a radio transponder reader (200),
**characterized in that**
- the resonant circuit (102) comprises a capacitance diode (124) arranged in parallel with the capacitors and **in that**
- the control unit (104) is designed and set up to actuate the capacitance diode (124) within an iterative resonant frequency ascertainment process on the basis of a control signal transmitted by a radio transponder reader (200) or generated in a radio transponder control unit.

2. Radio transponder according to Claim 1,
in which the control unit is designed and set up to generate a trip signal for a respective fuse of the resonant circuit on the basis of a resonant frequency ascertained by a radio transponder reader or by a radio transponder control unit, wherein the trip signals for the fuses are used to effect a final configuration of the resonant circuit.

3. Radio transponder according to either of Claims 1 and 2,
in which the control signal transmitted by the radio transponder reader is derived from a field strength measured value that a response signal of the radio transponder comprises, or in which the control signal in the radio transponder control unit is derived from a field strength measured value measured in the radio transponder.

4. Radio transponder according to Claim 3,
in which the control unit is designed and set up to initiate a transmission of the response signal by the transmission and reception unit on reception of an interrogation signal from a radio transponder reader.

5. Radio transponder according to one of Claims 1 to 4,
in which the fuses are polysilicon fuses.

6. Radio transponder according to Claim 5,
in which the polysilicon fuses are trippable by means of a current load.

7. Radio transponder according to one of Claims 1 to 4,
in which the fuses are integrated in a semiconductor chip and are trippable by means of laser.

8. Radio transponder according to one of Claims 1 to 7,
in which the radio transponder is an RFID tag.

9. Radio transponder according to one of Claims 1 to 8,
in which the radio transponder is operated passively and/or has no power supply of its own.

10. Method for tuning a radio transponder according to one of Claims 1 to 9, in which
- a radio transponder reader is used to send an interrogation signal to the radio transponder,
- the radio transponder ascertains a field strength measured value for the interrogation signal,
- the radio transponder transmits a response signal containing the field strength measured value to the radio transponder reader or to a radio transponder control unit,
- the radio transponder reader or the radio transponder control unit compares the field strength measured value with a prescribable reference value,
- the radio transponder reader or the radio transponder control unit, in the event of a defined discrepancy in the field strength measured value from the reference value, prompts connection of a first resonant circuit capacitor by means of an associated fuse or a first capacitance value of the radio transponder, and fresh ascertainment of an updated field strength measured value for fresh evaluation,
- the radio transponder reader or the radio transponder control unit, in the event of a defined discrepancy in the updated field strength measured value from the reference value, iteratively prompts connection of a further resonant circuit capacitor by means of an associated fuse or a further capacitance value of the radio transponder, and fresh field strength ascertainment,
**characterized in that**
- the resonant circuit comprises a capacitance diode arranged in parallel with the capacitors and **in that**
- the capacitance diode is actuated within an iterative resonant frequency ascertainment process by the radio transponder reader or by the radio transponder control unit on the basis of the field strength measured value.

11. Method according to Claim 10,
in which the resonant circuit capacitors are connected by means of associated fuses, for a final configuration of the resonant circuit, on the basis of a resonant frequency ascertained by the radio transponder reader or by the radio transponder control unit.

## Revendications

1. Transpondeur radio, comprenant
- une antenne (101),
- une unité (103) d'émission et de réception,
- un circuit (102) résonnant, qui est connecté à l'antenne (101) et qui a une pluralité de condensateurs (122) montés en parallèle les uns par rapport aux autres et montés chacun en série avec un fusible (123), un condensateur pouvant, au moyen d'un fusible monté en série, être mis en circuit pour accorder le circuit résonnant,
- une unité (104) de commande, qui est associée au circuit (102) résonnant et qui est conformée et conçue pour produire un signal de commutation d'un fusible (123) respectif du circuit de résonnance en fonction d'un signal (1) de commande transmis par un appareil (200) de lecture de transpondeur radio ou produit dans une unité de commande d'un transpondeur radio,
- une unité (105) de mémoire, qui peut être lue au moyen d'un appareil (200) de lecture de transpondeur radio et/ou dans laquelle on peut écrire,
**caractérisé en ce que**
- le circuit (102) résonnant comprend une diode (124) à capacité, montée en parallèle aux condensateurs et **en ce que**
- l'unité (104) de commande est conformée et conçue pour commander la diode (124) à capacité, dans une opération de détermination de la fréquence de résonnance par itération, en fonction d'un signal de commande transmis par un appareil (200) de lecture-transpondeur radio ou produit dans une unité de commande de transpondeur radio.

2. Transpondeur radio suivant la revendication 1,
dans lequel l'unité de commande est conformée et conçue pour produire un signal de commutation d'un fusible respectif du circuit résonnant, en fonction d'une fréquence de résonnance déterminée par un appareil de lecture de transpondeur radio ou par une unité de commande de transpondeur radio, dans lequel, au moyen des signaux de commutation des fusibles, il s'effectue une configuration achevée du circuit résonnant.

3. Transpondeur radio suivant l'une des revendications 1 ou 2,
dans lequel le signal de commande, transmis par l'appareil de lecture de transpondeur radio, est déduit d'une valeur de mesure de l'intensité de champ comprise par un signal de réponse du transpondeur radio ou dans lequel le signal de commande est déduit, dans l'unité de commande de transpondeur radio, d'une valeur de mesure de l'intensité de champ mesurée dans le transpondeur radio.

4. Transpondeur radio suivant la revendication 3,
dans lequel l'unité de commande est conformée et conçue pour déclencher une transmission d'un signal de réponse par l'unité d'émission et de réception à une réception d'un signal de demande d'un appareil de lecture de transpondeur radio.

5. Transpondeur radio suivant l'une des revendications 1 à 4,
dans lequel les fusibles sont des fusibles en polysilicium.

6. Transpondeur radio suivant la revendication 5,
dans lequel les fusibles en polysilicium peuvent être mis en circuit au moyen d'une charge en courant.

7. Transpondeur radio suivant l'une des revendications 1 à 4,
dans lequel les fusibles sont intégrés dans une puce à semiconducteur et peuvent être mis en circuit au moyen d'un laser.

8. Transpondeur radio suivant l'une des revendications 1 à 7,
dans lequel le transpondeur radio est une étiquette RFID.

9. Transpondeur radio suivant l'une des revendications 1 à 8,
dans lequel le transpondeur radio fonctionne de manière passive et/ou n'a pas sa propre alimentation d'énergie.

10. Procédé d'accord d'un transpondeur radio conforme à l'une des revendications 1 à 9, dans lequel
- au moyen d'un appareil de lecture de transpondeur radio, on envoie un signal de demande au transpondeur radio,
- on détermine une valeur de mesure de l'intensité du champ pour le signal de demande,
- le transpondeur radio transmet un signal de réponse ayant la valeur de mesure de l'intensité de champ à l'appareil de lecture du transpondeur radio ou à une unité de commande du transpondeur radio,
- l'appareil de lecture du transpondeur radio ou l'unité de commande du transpondeur radio compare la valeur de mesure de l'intensité de champ à une valeur de référence pouvant être donnée à l'avance,
- l'appareil de lecture du transpondeur radio ou l'unité de commande du transpondeur radio provoque, s'il y a un écart défini de la valeur de mesure de l'intensité du champ à la valeur de référence, une mise en circuit d'un premier condensateur du circuit résonnant au moyen d'un fusible associé ou d'une première valeur de capacité du transpondeur radio et une détermination renouvelée d'une valeur de mesure de l'intensité du champ mis à jour pour une exploitation renouvelée,
- l'appareil de lecture du transpondeur radio ou l'unité de commande du transpondeur radio provoque, s'il se produit un écart défini de la valeur de mesure de l'intensité du champ mis à jour à la valeur de référence, itérativement, une mise en circuit d'un autre condensateur du circuit résonnant, au moyen d'un fusible associé ou d'une autre valeur de capacité du transpondeur radio et une détermination renouvelée de l'intensité du champ,
**caractérisé en ce que**
- le circuit résonnant comprend une diode à capacité montée en parallèle aux condensateurs et
- on commande la diode à capacité dans une opération de détermination de la fréquence de résonnance par itération, par l'appareil de lecture du transpondeur radio ou par l'unité de commande du transpondeur radio, en fonction de la valeur de mesure de l'intensité du champ.

11. Procédé suivant la revendication 10,
dans lequel on met en circuit les condensateurs du circuit résonnant en fonction d'une fréquence de résonnance déterminée par l'appareil de lecture du transpondeur radio ou par l'unité de commande du transpondeur radio, au moyen de fusibles associés, pour obtenir une configuration achevée du circuit de résonnance.
